# EUROPÄISCHE PATENTANMELDUNG

(11) **EP 0 685 431 A2**
(43) Veröffentlichungstag der Anmeldung: **06.12.1995**
(21) Anmeldenummer: 95106533.3
(22) Anmeldetag: 29.04.1995
(51) Int. Cl.: C02F 1/00, B01D 21/02, B01D 21/18, B01D 21/20

(54) **Verfahren und Vorrichtung zur Sedimentabscheidung aus Abwasser**

(30) Priorität: 05.05.1994 DE 4415858
(71) Anmelder: Bormet, Horst, D-64331 Weiterstadt (DE)
(72) Erfinder: Fink, Erich, D-64285 Darmstadt (DE)
(74) Vertreter: Katscher, Helmut, Dipl.-Ing.

(57) **Zusammenfassung**

Zur Sedimentabscheidung aus Abwasser wird das Sediment in einem Absetzbehälter (1) abgesetzt und aus einem Absetzsumpf (9) durch eine Sediment-Fördereinrichtung (16) herausgefördert. Am Sediment anhaftende organische Bestandteile werden abgelöst, indem das Sediment im Absetzsumpf (9) mittels eines Rührwerks (10) durchmischt und mit Wasser ausgeschwemmt wird, das im unteren Bereich des Absetzsumpfes (9) zugeführt wird. Zusätzlich kann das Sediment belüftet werden. Die aus dem Sediment ausgewaschenen organischen Bestandteile werden zur Wasseroberfläche mitgenommen und mit dem Spülwasser über eine Überlaufkante (6) abgeführt.

## Beschreibung

Die Erfindung betrifft ein Verfahren zur Sedimentabscheidung aus Abwasser, wobei das Sediment in einem Absetzsumpf eines Absetzbehälters abgesetzt und von dort über den Wasserspiegel herausgefördert wird.

Das im Abwasser enthaltene Sediment, insbesondere Sand und andere anorganische Stoffe, die spezifisch schwerer als Wasser sind, sollen aus dem Abwasser vor dem weiteren Klärvorgang ausgeschieden werden, damit sie den weiteren Klärvorgang nicht belasten oder behindern, insbesondere durch Absetzen und Ansammlung in Klärbecken, Rinnen und Nachklärbecken.

Bei dem bekannten Verfahren der eingangs genannten Gattung fließt das Abwasser durch den als Sandfang wirkenden Absetzbehälter. Das sich darin ansammelnde Sediment, überwiegend Sand, wird kontinuierlich oder intermittierend herausgefördert und auf einer Deponie abgelagert.

Bei diesem bekannten Verfahren besteht eine Schwierigkeit darin, daß die anfallenden Sedimente üblicherweise etwa 30-70 % organische Anteile enthalten, die auf der Deponie zusätzlichen Raum beanspruchen und dort zu einem unerwünschten Fäulnisprozeß führen können. Diese organischen Anteile haften an dem anorganischen Sediment, beispielsweise Sand, so daß sie mit diesem im Absetzbehälter absinken und ausgetragen werden. Außerdem schreiben die für die Entsorgung von Siedlungsabfall geltenden Verordnungen vor, daß auf Deponien keine recyclingfähigen Stoffe gelagert werden. Vielmehr sollten alle organischen Bestandteile von Abwasser dem Klärungsprozeß zwecks Abbau und Klärgasgewinnung zugeführt werden.

Aufgabe der Erfindung ist es daher, ein Verfahren der eingangs genannten Gattung so auszubilden, daß bei der Sedimentabscheidung zugleich die anhaftenden organischen Bestandteile weitgehend getrennt und zusammen mit dem Abwasser dem Klärprozeß zugeführt werden.

Diese Aufgabe wird erfindungsgemäß dadurch gelöst, daß das Sediment im Absetzbehälter mechanisch durchmischt und gleichzeitig mit einer Spülwasserströmung durchspült wird, bevor es aus dem Absetzbehälter herausgefördert wird.

Durch die innige mechanische Durchmischung des Sediments und die dabei auftretende innere Reibung werden die anhaftenden organischen Bestandteile vom Sediment getrennt. Die während des Mischvorgangs erzeugte Spülwasserströmung schwemmt die organischen Bestandteile aus dem Sediment heraus und unterstützt eine gerichtete Wasserströmung zur Wasseroberfläche, von wo die organischen Bestandteile zusammen mit dem Abwasser abfließen, beispielsweise über eine Überlaufkante.

In weiterer Ausgestaltung des Erfindungsgedankens ist vorgesehen, daß in das Sediment während des Durchmischens und Spülens Luft eingeblasen wird. Durch die Belüftung wird das Aufsteigen der organischen Bestandteile erleichtert und unterstützt. Zugleich wird die nach oben gerichtete Wasserströmung verstärkt.

Vorzugsweise wird das Abwasser beim Einlaß in den Absetzbehälter als Prallströmung gegen eine Prallfläche geleitet. Durch die Aufprallenergie wird bereits ein Teil der organischen Stoffe in kleinere Partikel zerschlagen und teilweise von dem anhaftenden Sediment gelöst, um in der Auftriebströmung mitgenommen zu werden.

Die Erfindung betrifft auch eine vorteilhafte Vorrichtung zur Durchführung des Verfahrens.

Ausgehend von einer Vorrichtung mit einem Absetzbehälter, der eine Abwasser-Zulaufleitung und eine Überlaufkante aufweist, und mit einer aus dem Absetzsumpf des Absetzbehälters bis über den Wasserspiegel hinausführenden Sediment-Fördereinrichtung ist die erfindungsgemäße Vorrichtung dadurch gekennzeichnet, daß im Absetzsumpf ein mechanisches Rührwerk zum Durchmischen des Sediments angeordnet ist und daß eine Spülwasser-Zuleitung unterhalb des Rührwerks in den Absetzsumpf mündet.

Gegenüber der aus einem einfachen Absetzbehälter und einer Sediment-Fördereinrichtung bestehenden bekannten Vorrichtung zur Sedimentabscheidung wird mit der erfindungsgemäßen Vorrichtung bei nur geringem zusätzlichem Bauaufwand eine weitgehende Trennung der organischen Bestandteile vom anorganischen Sediment erreicht, wobei das im Absetzsumpf angesammelte Sediment durch das dort angeordnete Rührwerk mechanisch durchmischt wird und das durch die untenliegende Spülwasser-Zuleitung zugeführte Spülwasser durch das so durchmischte Sediment hindurchströmt, um in einer aufwärts gerichteten Wasserströmung die abgelösten organischen Bestandteile mitzunehmen, so daß sie dem weiteren Klärprozeß zugeführt werden.

Gemäß einer bevorzugten Ausführungsform ist vorgesehen, daß das Rührwerk mindestens eine, vorzugsweise jedoch zwei parallele, mit Rührflügeln besetzte Rührwellen aufweist. Bei geringem Platzbedarf und verhältnismäßig geringer Antriebsenergie wird dadurch eine wirksame, innige Durchmischung des Sediments erreicht.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:
Fig. 1 eine Vorrichtung zur Sedimentabscheidung aus Abwasser in einem Längsschnitt,
Fig. 2 eine Draufsicht auf die Vorrichtung nach Fig. 1,
Fig. 3 einen Teilschnitt längs der Linie III-III in Fig. 1,
Fig. 4 einen Teilschnitt längs der Linie IV-IV in Fig. 1,
Fig. 5 einen Schnitt längs der Linie V-V in Fig. 1,
Fig. 6 einen Schnitt längs der Linie VI-VI in Fig. 1 und
Fig. 7 in einem Teilschnitt ähnlich der Fig. 1 eine abgewandelte Ausführungsform der Vorrichtung.

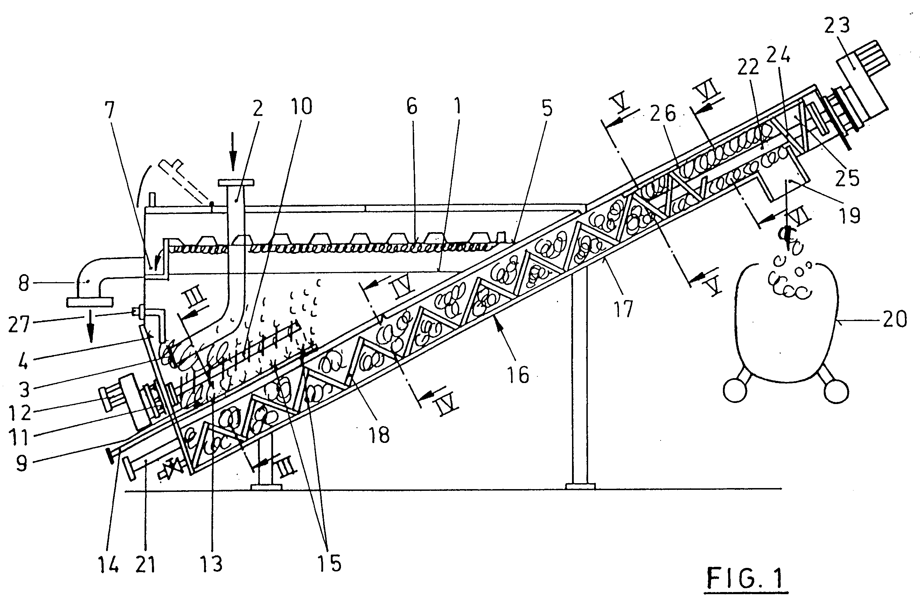

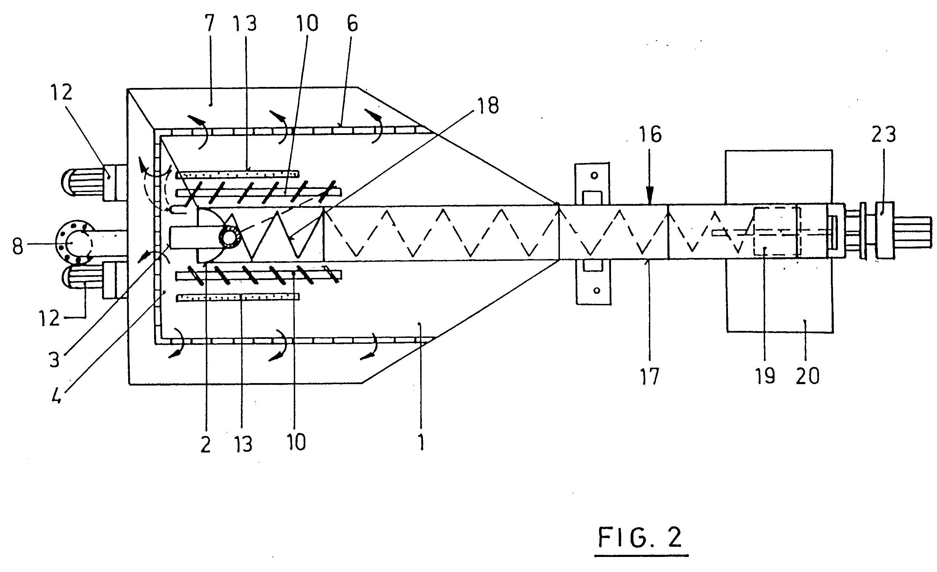

Die in den Fig. 1-6 in einer ersten Ausführungsform dargestellte Vorrichtung zur Sedimentabscheidung aus Abwasser ist im Zulaufbereich eines Klärwerks angeordnet und dient dazu, vor dem Klärprozeß, in dem die organischen Bestandteile des Abwassers abgebaut werden, das im Abwasser enthaltene anorganische Sediment, überwiegend Sand, abzuscheiden.

Die Vorrichtung weist einen Absetzbehälter 1 auf, dem das Abwasser über eine Abwasser-Zulaufleitung 2 zugeführt wird, die ein im unteren Drittel des Absetzbehälters 1 mündendes Zulaufrohr ist, dessen Rohrmündung 3 gegen eine als Prallwand wirkende Behälterwand 4 gerichtet ist. Beim Aufprall der Abwasserströmung auf die Prallwand 4 werden gröbere Feststoffteile zerschlagen, wobei sich bereits ein Teil der an dem anorganischen Sediment haftenden organischen Bestandteile ablöst.

Die Höhe des Wasserspiegels 5 im Absetzbehälter 1 wird durch eine Überlaufkante 6 bestimmt, über die das Abwasser in eine Rinne 7 und von dort in eine Abwasser-Ablaufleitung 8 fließt. Die Überlaufkante 6 ist an drei Seiten des Absetzbehälters 1 ausgebildet und bildet dort die Oberkante des Absetzbehälters 1. Da die Abwasser-Zulaufleitung 2 im unteren Bereich des Absetzbehälters 1 mündet, wird verhindert, daß ein Teil des Sediments durch die Schleppkraft des Abwassers bis in die Abwasser-Ablaufleitung 8 transportiert wird, da sich über den gesamten Querschnitt des Absetzbehälters 1 eine verhältnismäßig langsame, aufwärts gerichtete Strömung einstellt.

Das infolge seines spezifischen Gewichts im Abwasser absinkende Sediment sammelt sich in dem als Absetzsumpf 9 bezeichneten unteren Bereich des Absetzbehälters 1. In diesen Absetzsumpf 9 ragen zwei parallele Rührwellen 10, die mit Rührflügeln besetzt sind und jeweils von einem Rührwellenlager 11 in der Wand 3 ansteigend vorkragen. An das Rührwellenlager 11 ist jeweils ein Rührantrieb 12 außerhalb der Wand 3 angeschlossen.

Die Rührwellen 10 bilden ein mechanisches Rührwerk, das das im Absetzsumpf 9 angesammelte Sediment innig durchmischt. Durch die unmittelbare Einwirkung des Rührwerks und insbesondere die dadurch mittelbar erzeugte innere Reibung im Sediment werden die anhaftenden organischen Bestandteile von den anorganischen Sedimentteilen, insbesondere Sand, gelöst.

Unterhalb jeder Rührwelle 10 ist parallel dazu jeweils ein Verteilerrohr 13 angeordnet, das mit einer Luftzuleitung 14 an eine Druckluftquelle angeschlossen und über seine Länge mit Luftauslaßdüsen 15 versehen ist.

Eine das Sediment aus dem Absetzbehälter 1 herausfördernde Sediment-Fördereinrichtung 16 ist in einer vom untersten Teil des Absetzsumpfes 9 bis über den Wasserspiegel 5 hinaus und aus dem Absetzbehälter 1 herausführenden, schräg ansteigenden Förderrinne 17 angeordnet.

Die Sediment-Fördereinrichtung 16 weist eine aus dem unteren Teil des Absetzsumpfes 9 schräg ansteigende, in der Förderrinne 17 liegende Förderwendel 18 auf, die das Sediment zu einer seitlichen Abwurföffnung 19 nahe dem oberen Ende der Förderrinne 17 fördert, von wo es in einen Transportwagen 20 fällt.

Die Förderrinne ist im Bereich des Absetzsumpfes 9 an der Oberseite offen, so daß das Sediment in die Förderrinne 17 eintreten kann. In ihrem übrigen Bereich ist die Förderrinne 17 an der Oberseite abgedeckt, um zu verhindern, daß im Abwasser enthaltene organische Bestandteile wieder in das in der Förderrinne 17 enthaltene Sediment eintreten können.

Am unteren Ende der Förderrinne 17 und somit im unteren Bereich des Absetzsumpfes 9 mündet unterhalb des Rührwerks 10 eine Spülwasser-Zuleitung 21 etwa zentrisch am unteren Ende der Förderwendel 18. Das durch die Leitung 21 eintretende Spülwasser, beispielsweise gereinigtes Wasser aus dem Kläranlagen-Ablauf, schwemmt die beim Mischungsvorgang vom Sediment abgetrennten organischen Bestandteile aus dem Sediment aus und erzeugt bzw. unterstützt eine nach oben gerichtete Wasserströmung, die die abgelösten organischen Bestandteile mit dem Abwasser mitnimmt. Dieser Vorgang wird durch die über die Luftzuleitung 14 und die Verteilerrrohre 13 zugeführte Druckluft noch unterstützt, die das Ausschwemmen und den Auftrieb der ausgeschwemmten organischen Bestandteile unterstützt. Die an den organischen Bestandteilen anhaftenden Luftbläschen unterstützen die Förderung der organischen Bestandteile bis zur Wasseroberfläche, so daß sie über die Ablaufrinne 7 in den Abwasser-Ablauf 8 gelangen.

Die Förderwendel 18 ist an ihrem oberen Ende mit einer zentralen Förderwelle 22 verbunden, die sich über die seitliche Abwurföffnung 19 hinaus zu einem Förderantrieb 23 erstreckt. Die Förderwelle 22 weist an ihrem jenseits der Abwurföffnung 19 liegenden Bereich eine zur Förderwendel 18 gegenläufige Gegenschnecke 24 auf. Die Gegenschnecke 24 ist mit einem Abstreifer 25 verbunden. Im Bereich der Förderwelle 22 ist eine obenliegende, abnehmbare Abdeckung 26 über der Förderrinne 17 vorgesehen.

Die Gegenschnecke 24 verhindert, daß das Sediment über die Abwurföffnung 19 hinausgeschoben wird. Der als Kratzerblech ausgeführte Abstreifer 25 schabt das getrocknete und verdichtete Sediment in die Abwurföffnung 19.

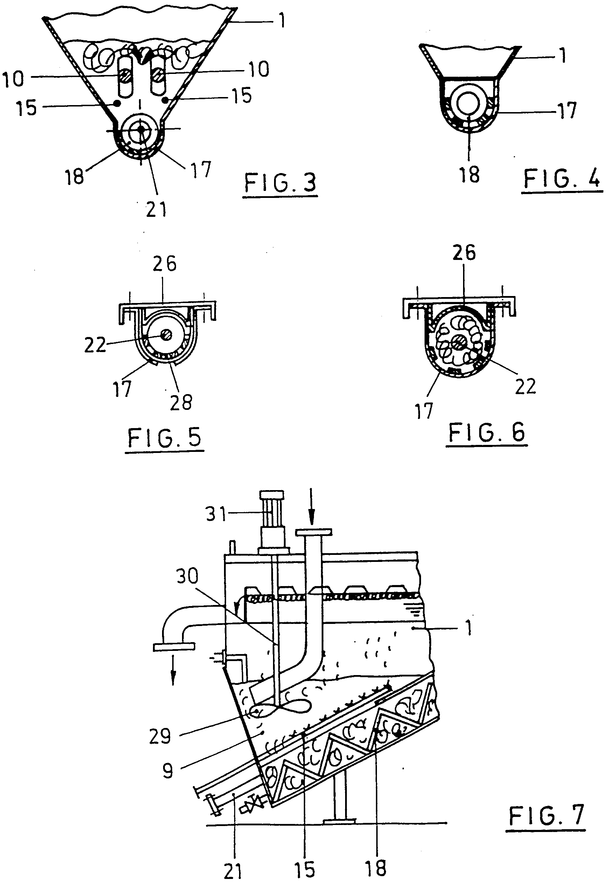

Im Betrieb wird diskontinuierlich Abwasser durch die Abwasser-Zulaufleitung 2 zugeführt. Das darin enthaltene Sediment setzt sich im Absetzsumpf 9 ab. Ein im Absetzbehälter 1 angeordneter Füllstandssensor 27 erfaßt die Höhe des abgesetzten Sediments. Wenn das Sediment eine vorgegebene Höhe erreicht hat, wird der Zulauf über die Abwasser-Zulaufleitung 2 gestopt. Dann wird in der schon beschriebenen Art und Weise durchmischt, gespült und belüftet, wobei die am Sediment anhaftenden organischen Bestandteile abgetrennt und mit dem ablaufenden Spülwasser abgefördert werden. Nach Ablauf einer vorgegebenen Zeit werden der Rührwerkantrieb 12, die Spülwasserzufuhr und die Druckluftzufuhr abgeschaltet. Nach einer dem Absetzen des restlichen Sediments dienenden Haltephase wird die Sediment-Fördereinrichtung 16 über eine den Sediment-Füllstand erfassende oder eine zeitabhängige Antriebssteuerung eingeschaltet und fördert das Sediment aus dem Absetzsumpf 9 zur Abwurföffnung 19. Sobald das Sediment dabei über den Wasserspiegel 5 gefördert ist, strömt das überschüssige Wasser durch Rücklaufspalten 28 (Fig. 5) in den Absetzbehälter 1 zurück. In dem nicht mehr mit einer Förderwendel versehenen Abschnitt der Förderwelle 22 bildet das Sediment einen Preßstopfen und wird dadurch weiter entwässert und verdichtet, bevor es durch die Abwurföffnung 19 in den Behälter 20 abgeworfen wird.

Durch eine Zeitsteuereinrichtung oder einen Füllstandssensor wird der Förderantrieb 23 abgeschaltet, sobald der Sedimentstand im Absetzsumpf 9 so weit abgesunken ist, daß der offene Bereich der Förderwendel 18 gerade noch mit Sediment bedeckt ist.

Fig. 7 zeigt eine hinsichtlich des Rührwerks abgewandelte Ausführungsform der Vorrichtung. Das Rührwerk weist hierbei einen im Absetzsumpf 9 angeordneten Mischpropeller 29 auf, der mit einer nach oben ragenden Mischerwelle 30 verbunden ist. Die Mischerwelle 30 wird durch einen Rührwerksantrieb 31 an der Oberseite des Absetzbehälters 1 angetrieben.

## Patentansprüche

1. Verfahren zur Sedimentabscheidung aus Abwasser, wobei das Sediment in einem Absetzsumpf eines Absetzbehälters abgesetzt und von dort über den Wasserspiegel herausgefördert wird, dadurch gekennzeichnet, daß das Sediment im Absetzbehälter mechanisch durchmischt und gleichzeitig mit einer Spülwasserströmung durchspült wird, bevor es aus dem Absetzbehälter herausgefördert wird.

2. Verfahren nach Anspruch 1, dadurch gekennzeichnet, daß in das Sediment während des Durchmischens und Spülens Luft eingeblasen wird.

3. Verfahren nach Anspruch 1, dadurch gekennzeichnet, daß das Abwasser beim Einlaß in den Absetzbehälter als Prallströmung gegen eine Prallfläche geleitet wird.

4. Vorrichtung zur Durchführung des Verfahrens nach einem der Ansprüche 1-3 mit einem Absetzbehälter, der eine Abwasser-Zulaufleitung und eine Überlaufkante aufweist, und mit einer aus dem Absetzsumpf des Absetzbehälters bis über den Wasserspiegel hinausführenden Sediment-Fördereinrichtung, dadurch gekennzeichnet, daß im Absetzsumpf (9) ein mechanisches Rührwerk (10, 29) zum Durchmischen des Sediments angeordnet ist, und daß eine Spülwasser-Zuleitung (21) unterhalb des Rührwerks (10) in den Absetzsumpf (9) mündet.

5. Vorrichtung nach Anspruch 4, dadurch gekennzeichnet, daß das Rührwerk mindestens eine mit Rührflügeln besetzte Rührwelle (10) aufweist.

6. Vorrichtung nach Anspruch 5, dadurch gekennzeichnet, daß das Rührwerk zwei parallele Rührwellen (10) aufweist.

7. Vorrichtung nach Anspruch 5 oder 6, dadurch gekennzeichnet, daß die Rührwelle (10) von einem Rührwellenlager (11) in einer Wand (4) des Absetzbehälters (1) ansteigend vorkragt.

8. Vorrichtung nach Anspruch 4, dadurch gekennzeichnet, daß die Sediment-Fördereinrichtung (16) eine aus dem unteren Teil des Absetzsumpfes (9) schräg ansteigende Förderwendel (15) aufweist.

9. Vorrichtung nach Anspruch 8, dadurch gekennzeichnet, daß die Spülwasser-Zuleitung (21) zentrisch am unteren Ende der Förderwendel (18) mündet.

10. Vorrichtung nach Anspruch 4, dadurch gekennzeichnet, daß mindestens eine mit mehreren Luftaustrittsdüsen (15) versehene Luftzuleitung (14) unterhalb des Rührwerks (10) angeordnet ist.

11. Vorrichtung nach Ansprüchen 5 und 10, dadurch gekennzeichnet, daß die Luftzuleitung ein parallel unterhalb der Rührwelle angeordnetes Verteilerrohr (13) aufweist, das über seine Länge mit Luftaustrittsdüsen (15) versehen ist.

12. Vorrichtung nach Anspruch 4, dadurch gekennzeichnet, daß die Abwasser-Zulaufleitung (2) ein im unteren Drittel des Absetzbehälters (1) mündendes Zulaufrohr ist.

13. Vorrichtung nach Anspruch 12, dadurch gekennzeichnet, daß die Rohrmündung (3) des Zulaufrohrs (2) gegen eine Prallwand (4) gerichtet ist.

14. Vorrichtung nach Anspruch 4, dadurch gekennzeichnet, daß die Sediment-Fördereinrichtung (16) mit einer den Sediment-Füllstand erfassenden Antriebssteuerung versehen ist.

15. Vorrichtung nach Anspruch 4, dadurch gekennzeichnet, daß die Sediment-Fördereinrichtung (16) mit einer zeitabhängigen Antriebssteuerung versehen ist.

16. Vorrichtung nach Anspruch 8, dadurch gekennzeichnet, daß die Förderwendel (18) der Sediment-Fördereinrichtung (16) in einer an der Unterseite des Absetzbehälters (1) angeordneten, schräg ansteigenden Förderrinne (17) angeordnet ist, die im Bereich des Absetzsumpfes (9) an der Oberseite offen und in ihrem übrigen Bereich abgedeckt ist.

17. Vorrichtung nach Anspruch 8, dadurch gekennzeichnet, daß die Förderwendel (18) an ihrem oberen Ende mit einer zentralen Förderwelle (22) verbunden ist, die sich über eine seitliche Abwurföffnung (19) hinaus zu einem Förderantrieb (23) erstreckt.

18. Vorrichtung nach Anspruch 7, dadurch gekennzeichnet, daß die Förderwelle (22) in ihrem jenseits der Abwurföffnung (19) liegenden Bereich eine zur Förderwendel (18) gegenläufige Gegenschnecke (24) aufweist.

19. Vorrichtung nach Anspruch 18, dadurch gekennzeichnet, daß die Gegenschnecke (24) mit einem Abstreifer (25) verbunden ist.

20. Vorrichtung nach Anspruch 17, dadurch gekennzeichnet, daß im Bereich der Förderwelle (22) eine obenliegende, abnehmbare Abdeckung (26) vorgesehen ist.

21. Vorrichtung nach Anspruch 4, dadurch gekennzeichnet, daß die Oberkante des Absetzbehälters (1) an drei Seiten eine Überlaufkante (6) bildet.

22. Vorrichtung nach Anspruch 4, dadurch gekennzeichnet, daß das Rührwerk einen im Absetzsumpf angeordneten Mischpropeller (29) aufweist.
